# EUROPEAN PATENT SPECIFICATION

(11) **EP 4 724 989 B1**
(45) Date of publication and mention of the grant of the patent: **14.10.2026**
(21) Application number: 24772522.9
(22) Date of filing: 29.08.2024
(51) Int. Cl.: G06T 11/60

(54) **ARTIFICIAL INTELLIGENCE MODEL TRAINING FOR IMAGE GENERATION**
TRAINING EINES MODELLS DER KÜNSTLICHEN INTELLIGENZ ZUR BILDERZEUGUNG
ENTRAÎNEMENT DE MODÈLE D'INTELLIGENCE ARTIFICIELLE POUR GÉNÉRATION D'IMAGE

(43) Date of publication of application: 15.04.2026
(60) Divisional application: 26193908.6
(73) Proprietor: Google LLC, Mountain View, CA 94043 (US)
(72) Inventor: GONG, Haifeng, Mountain View, California 94043 (US); WANG, Dongdong, Mountain View, California 94043 (US); SOHN, Kihyuk, Mountain View, California 94043 (US); HAO, Yuan, Mountain View, California 94043 (US)
(74) Representative: Marks & Clerk GST
(86) International application number: PCT/US2024/044413
(87) International publication number: WO 2026/049733

(56) References cited:
- US-A1- 2023 305 690
- YUTAO CHENG ET AL: "Graphic Design with Large Multimodal Model", ARXIV.ORG, CORNELL UNIVERSITY LIBRARY, 201 OLIN LIBRARY CORNELL UNIVERSITY ITHACA, NY 14853, 22 April 2024 (2024-04-22), XP091735978
- YAMAGUCHI KOTA: "CanvasVAE: Learning to Generate Vector Graphic Documents", 2021 IEEE/CVF INTERNATIONAL CONFERENCE ON COMPUTER VISION (ICCV), IEEE, 10 October 2021 (2021-10-10), pages 5461 - 5469, XP034093251, DOI: 10.1109/ICCV48922.2021.00543

## Description

### TECHNICAL FIELD

This specification relates to data processing, artificial intelligence, and generating images using artificial intelligence.

### BACKGROUND

In a computer networked environment such as the Internet, third-party content providers provide third-party content items for display on end-user computing devices. These third-party content items, for example, digital images and video, can be displayed on client devices in the environment. Digital images and video can be used, for example, on the Internet, for remote meetings via video conferencing, high-definition video entertainment, and/or sharing of usergenerated content.

Recent developments in artificial intelligence and, in particular, generative artificial intelligence have caused user-produced visual content such as digital images to become ubiquitous. For example, various types of images can be generated by using a text-to-image models based on text prompts. However, current generative artificial intelligence models often produce inaccurate and/or low quality images. "Graphic Design with Large Multimodal Model", Yutao Cheng et al, XP091735978, relates to graphic design automation, in which a large multimodal model tackles hierarchical layout generation tasks as sequence generation challenges. The large multimodal model takes RGB-A images as input and produces JSON draft protocols that define the layout parameters of graphic compositions. US 2023/305690 A1 discloses a method for utilizing a design language model and a generative language model to generate digital design documents with design variations. "CanvasVAE: Learning to Generate Vector Graphic Documents", Yamaguchi Kota, XP034093251, discloses an unconditional generative model for generating vector graphic documents.

### SUMMARY

In general, one innovative aspect of the subject matter described in this specification can be embodied in methods that include the actions of obtaining first training data including a set of first training samples, wherein each first training sample includes a first image; training, using the first training data, an image parser model to output structured representations of input images; obtaining a set of second images; processing the second images using the image parser model to generate second training data including a set of second training samples, wherein each second training sample includes a second image and a corresponding structured representation of content items depicted by the second image output by the image parser model based on the second image; training, using the second training data, an image design model to output a structured representation for an input including a set of content items, the set of content items including at least one of text or one or more images; obtaining a new set of content items for a new image; processing the set of content items for the new image using the image design model to generate a corresponding new structured representation for the new image; and generating the new image using the set of content items and the new structured representation. Other implementations of this aspect include corresponding apparatus, systems, and computer programs, configured to perform the aspects of the methods, encoded on computer storage devices.

These and other embodiments can each optionally include one or more of the following features. Some aspects include distributing the new image to one or more client devices.

In some aspects, each structured representation indicates locations at which content is depicted by the image corresponding to the structured representation.

In some aspects, obtaining the first training data includes generating additional first training samples in the first training data by adding noise to the first images, the corresponding structured representations of the content items depicted by the first images, or both. Generating additional first training samples in the first training data by adding noise to the first images, the corresponding structured representations of the content items depicted by the first images, or both can include generating an additional first training sample by adjusting one or more of a color, size, or location of a content item of a given first image.

In some aspects, the image parser comprises a neural network that includes a first sub-neural network trained to split a rendering into multiple layers and a second sub-neural network trained to convert the multiple layers into content items and a corresponding structured representation.

In some aspects, each first training sample includes a corresponding structured representation of content items depicted by the first image of the first training sample. Training, using the first training data, the image parser model to output structured representations of input images can include training the image parser model using supervised learning.

In some aspects, training, using the first training data, the image parser model to output structured representations of input images includes training the image parser model to optimize a loss function based on a difference between each first image and a rendered image that is rendered based on a structured representation of the first image output by the image parser model.

Particular embodiments of the subject matter described in this specification can be implemented so as to realize one or more of the following advantages. The techniques described in this document create robust sets of training data for training artificial intelligence image design models to generate data that is used to create new images that can be used to create digital components that are distributed to users. Using the robust training data described in this document enables the models to create more diverse and higher quality (e.g., improved relevance, aesthetics, and/or performance) image designs than those resulting from training data that is currently available. The described techniques can generate robust training data by training an image parser model to parse static images into its content items (e.g., text, images, logos, buttons, etc.) and a structured representation that indicates characteristics of the content items, the location of the content items in the images. This enables the image design models to be trained using both available training data that includes this rich data about images as well as static images for which such data was previously unavailable. As the number of available static images can greatly exceed the number of images for which rich data is available, this greatly increases the amount of training data and resulting quality of the images generated using models trained using the robust training data. For example, training models using a larger number of training samples typically results in higher quality models, especially when the larger number of training samples are of high quality as described herein.

Training data can also be generated by using artificial intelligence to generate new images and corresponding structured representations. However, images generated using artificial intelligence are often of lower quality than actual static images obtained from various sources, e.g., from the Internet or digital component providers that publish image digital components. Additionally, images generated using generative artificial intelligence models often include hallucinations and/or other artifacts that would reduce the quality of models trained using these images and the images created based on the outputs of these models. The techniques described in this document include training an image parser model to generate accurate training data that includes high quality images provided as input to the image parser model and the corresponding content items and structured representations output by the image parser model. Using real static images to create a large, robust, and accurate set of training data and then training an image design model using this training data results in a higher quality image design model that can generate higher quality structured representations for a set of new content items than using images and corresponding structured representations created using generative artificial intelligence.

Additionally, the static images that are selected for use in generating the training data can be selected such that they are all of high quality and/or obtained from high quality sources, e.g., by obtaining actual image digital components published by digital component providers. Using images that have been published for a particular purpose, e.g., for use in creating digital components, also ensures that the trained image design model is adapted to that particular purpose. Thus, the techniques described in this document solve various problems in training an image design model, including a lack of training data and a lack of techniques for generating high quality training data.

Training the models using content items and structured representations also increases the quality of the images generated using the models while also reducing the complexity of the models and corresponding computational resources required to process the models relative to models trained using pixel data for images. Thus, the described techniques enable more and better training data than existing solutions, resulting in higher quality and more diverse designs than before. The complexity of the models can be reduced as compared to large language models (LLMs) that include billions of parameters whereas the models described in this document can be implemented as neural networks with substantially fewer parameters (e.g., millions, tens of millions, or even fewer).

In addition, the training data can be further expanded to include even more diverse designs by adding noise to the training data before training the image parser model. For example, characteristics of content items depicted by an image can be adjusted to create new training samples. In this way, the models can be trained based on many different training samples created from each training image. This increased number of training samples and more diverse training designs also increases the accuracy of the image parser model in parsing static images into content items and structured representations.

The details of one or more embodiments of the subject matter described in this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example environment in which generative artificial intelligence can be implemented to generate images and digital components.
FIG. 2 is a block diagram illustrating interactions between an artificial intelligence system, an image parser model, an image design model, and a client device.
FIG. 3 is a block diagram of an example process for training an image parser model and using the image parser model to generate structured representations of images.
FIG. 4 is a block diagram of an example process for training an image parser model.
FIG. 5 is a block diagram of an example process for generating images using an image design model.
FIG. 6 is a flow chart of an example process of generating images using an image parser model and an image design model.
FIG. 7 a block diagram of an example computer.

Like reference numbers and designations in the various drawings indicate like elements.

### DETAILED DESCRIPTION

This specification describes techniques for training and using AI models to generate new images. Artificial intelligence (AI) is a segment of computer science that focuses on the creation of models that can perform tasks and actions autonomously, e.g., with little to no human intervention. AI systems can utilize, for example, one or more of machine learning, natural language processing, or computer vision. Machine learning, and its subsets, such as deep learning, focus on developing models that can infer outputs from data. The outputs can include, for example, predictions and/or classifications. Natural language processing focuses on analyzing and generating human language. Computer vision focuses on analyzing and interpreting images and videos. Artificial intelligence systems can include generative models that generate new content, such as images, videos, text, audio, and/or other content, in response to input prompts and/or based on other information.

The techniques described throughout this specification enable AI to generate training data from static images and use the training data to train image design models to generate image data that can be used to generate new images. In general, a new image can be created using content items that are arranged in a particular manner. For example, the content items can include text, one or more images, logos, graphics, interactive elements (e.g., buttons, icons, etc.), and/or other types of visual content. The image design model can be trained to accept as input a set of content items and output image data that includes a structured representation of the content items. The structured representation can specify the arrangement of each content item to form a new image, the color(s) depicted by each content item, the size of each content item (e.g., in number of pixels or in pixel dimensions), data indicating shape cropping (e.g., irregular shape cropping), decorations (e.g., gradients), geometric elements, font characteristics of text content items (e.g., font type and/or size), transparencies of content items, and/or other characteristics of the image or individual content items in the image. For example, the structured representation can specify the vertical and horizontal coordinates of each content item or the relative position of the content items with respect to each other (e.g., one content item at the top, another content item below that content item, etc.). The vertical coordinates can indicate the boundary of the content item. A new image can be generated, e.g., by a rendering engine, using the set of content items and the structured representation.

To generate the training data for the image design model, an image parser model can be trained to accept static images (e.g., images without a known structured representation) as input and output the content items depicted by the image and a structured representation of the content items depicted by the image. The content items, corresponding structured representations, and/or the rendering of each image can then be used as training samples to train the image design model. Using the image parser model to generate the training data in this way results in a substantially larger number of training samples relative to using only those images for which a structure representation is already known. In addition, noise techniques can be used to generate additional training samples. For example, noise techniques can be used to generate multiple training samples from a single training sample by adjusting characteristics of a training sample. In a particular example, the noise techniques can include adjusting the location, color, and/or size of one or more content items in the structured representation of a training sample. Expanding the training data in this way results in a more diverse training data that enables the image design model to generate more diverse and higher quality (e.g., more relevant, accurate, and/or aesthetically pleasing) image designs than using the few images for which structured representations are known. For example, the structured representation ensures that there is no misspelled text, gibberish text, imperfect and/or distorted shapes (e.g., circles and squares), etc., similar to vectorized graphics and rasterized pixels.

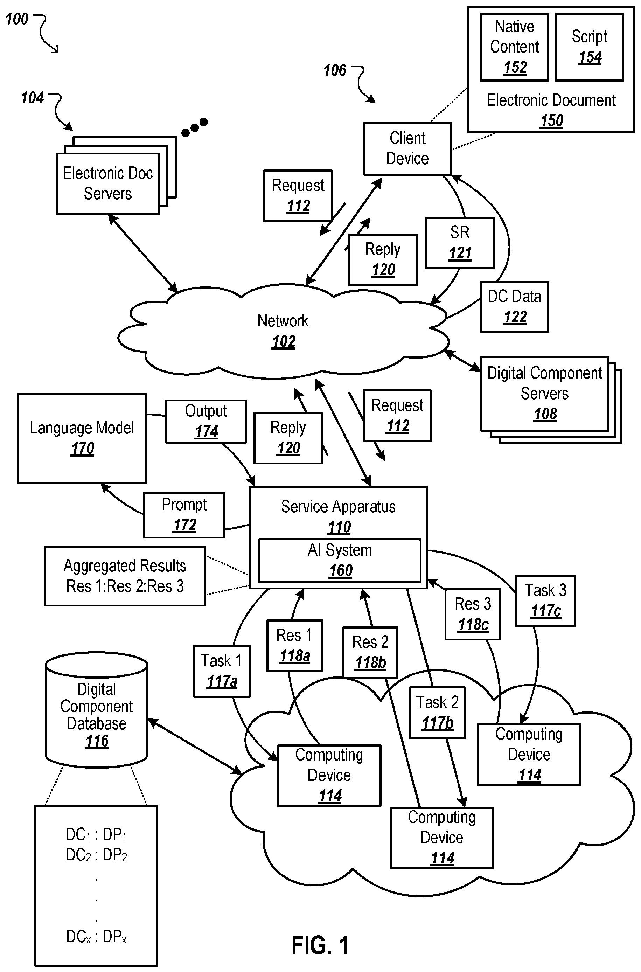

FIG. 1 is a block diagram of an example environment 100 in which generative AI can be implemented to generate images and digital components. The example environment 100 includes a network 102, such as a local area network (LAN), a wide area network (WAN), the Internet, or a combination thereof. The network 102 connects electronic document servers 104, client devices 106, digital component servers 108, and a service apparatus 110. The example environment 100 may include many different electronic document servers 104, client devices 106, and digital component servers 108.

The service apparatus 110 is configured to provide various services to client devices 106, publishers of electronic documents 150, and/or digital component providers that provide digital components to client devices 106, e.g., using the service apparatus 110. In some implementations, the service apparatus 110 can provide search services by providing responses to search queries received from client devices 106. For example, the services apparatus 110 can include a search engine and/or an AI agent or other chat agent that enables users to interact with the agent over the course of multiple conversational queries and responses. The service apparatus 110 can also distribute digital components to client devices 106 for presentation with the responses and/or with electronic documents 150. For example, another search service computer system can send component requests 112 to the service apparatus 110 and these component requests 112 can include one or more queries. In another example, client devices 106 can send component requests 112 to the service apparatus 110, e.g., in response to loading an electronic document 150 that includes a digital component slot for presenting a digital component, as described in more detail below.

The service apparatus 110 is configured to generate images, e.g., digital components that include images ("image digital components"). The service apparatus 110 and component requests 112 are described in further detail below.

As used throughout this document, the phrase "digital component" refers to a discrete unit of digital content or digital information (e.g., a video clip, audio clip, multimedia clip, gaming content, image, text, bullet point, artificial intelligence output, language model output, or another unit of content). A digital component can electronically be stored in a physical memory device as a single file or in a collection of files, and digital components can take the form of video files, audio files, multimedia files, image files, or text files and include advertising information, such that an advertisement is a type of digital component.

A client device 106 is an electronic device capable of requesting and receiving online resources over the network 102. Example client devices 106 include personal computers, gaming devices, mobile communication devices, digital assistant devices, augmented reality devices, virtual reality devices, and other devices that can send and receive data over the network 102. A client device 106 typically includes a user application, such as a web browser, to facilitate the sending and receiving of data over the network 102, but native applications (other than browsers) executed by the client device 106 can also facilitate the sending and receiving of data over the network 102.

A gaming device is a device that enables a user to engage in gaming applications, for example, in which the user has control over one or more characters, avatars, or other rendered content presented in the gaming application. A gaming device typically includes a computer processor, a memory device, and a controller interface (either physical or visually rendered) that enables user control over content rendered by the gaming application. The gaming device can store and execute the gaming application locally, or execute a gaming application that is at least partly stored and/or served by a cloud server (e.g., online gaming applications). Similarly, the gaming device can interface with a gaming server that executes the gaming application and "streams" the gaming application to the gaming device. The gaming device may be a tablet device, mobile telecommunications device, a computer, or another device that performs other functions beyond executing the gaming application.

Digital assistant devices include devices that include a microphone and a speaker. Digital assistant devices are generally capable of receiving input by way of voice, and respond with content using audible feedback, and can present other audible information. In some situations, digital assistant devices also include a visual display or are in communication with a visual display (e.g., by way of a wireless or wired connection). Feedback or other information can also be provided visually when a visual display is present. In some situations, digital assistant devices can also control other devices, such as lights, locks, cameras, climate control devices, alarm systems, and other devices that are registered with the digital assistant device.

As illustrated, the client device 106 is presenting an electronic document 150. An electronic document is data that presents a set of content at a client device 106. Examples of electronic documents include webpages, word processing documents, portable document format (PDF) documents, images, videos, search results pages, and feed sources. Native applications (e.g., "apps" and/or gaming applications), such as applications installed on mobile, tablet, or desktop computing devices are also examples of electronic documents. Electronic documents can be provided to client devices 106 by electronic document servers 104 ("Electronic Doc Servers").

For example, the electronic document servers 104 can include servers that host publisher websites. In this example, the client device 106 can initiate a request for a given publisher webpage, and the electronic server 104 that hosts the given publisher webpage can respond to the request by sending machine executable instructions that initiate presentation of the given webpage at the client device 106.

In another example, the electronic document servers 104 can include app servers from which client devices 106 can download apps. In this example, the client device 106 can download files required to install an app at the client device 106, and then execute the downloaded app locally (i.e., on the client device). Alternatively, or additionally, the client device 106 can initiate a request to execute the app, which is transmitted to a cloud server. In response to receiving the request, the cloud server can execute the application and stream a user interface of the application to the client device 106 so that the client device 106 does not have to execute the app itself. Rather, the client device 106 can present the user interface generated by the cloud server's execution of the app, and communicate any user interactions with the user interface back to the cloud server for processing.

Electronic documents can include a variety of content. For example, an electronic document 150 can include native content 152 that is within the electronic document 150 itself and/or does not change over time. Electronic documents can also include dynamic content that may change over time or on a per-request basis. For example, a publisher of a given electronic document (e.g., electronic document 150) can maintain a data source that is used to populate portions of the electronic document. In this example, the given electronic document can include a script, such as the script 154, that causes the client device 106 to request content (e.g., a digital component) from the data source when the given electronic document is processed (e.g., rendered or executed) by a client device 106 (or a cloud server). The client device 106 (or cloud server) integrates the content (e.g., digital component) obtained from the data source into the given electronic document to create a composite electronic document including the content obtained from the data source.

In some situations, a given electronic document (e.g., electronic document 150) can include a digital component script (e.g., script 154) that references the service apparatus 110, or a particular service provided by the service apparatus 110. In these situations, the digital component script is executed by the client device 106 when the given electronic document is processed by the client device 106. Execution of the digital component script configures the client device 106 to generate a request for digital components (referred to as a "component request"), which is transmitted over the network 102 to the service apparatus 110. For example, the digital component script can enable the client device 106 to generate a packetized data request including a header and payload data. The component request 112 can include event data specifying features such as a name (or network location) of a server from which the digital component is being requested, a name (or network location) of the requesting device (e.g., the client device 106), and/or information that the service apparatus 110 can use to select one or more digital components, or other content, provided in response to the request. The component request 112 is transmitted, by the client device 106, over the network 102 (e.g., a telecommunications network) to a server of the service apparatus 110.

The component request 112 can include event data specifying other event features, such as the electronic document being requested and characteristics of locations of the electronic document at which the digital component can be presented. For example, event data specifying a reference (e.g., URL) to an electronic document (e.g., webpage) in which the digital component will be presented, available locations of the electronic documents that are available to present digital components, sizes of the available locations, and/or media types that are eligible for presentation in the locations can be provided to the service apparatus 110. Similarly, event data specifying keywords associated with the electronic document ("document keywords") or entities (e.g., people, places, or things) that are referenced by the electronic document can also be included in the component request 112 (e.g., as payload data) and provided to the service apparatus 110 to facilitate identification of digital components that are eligible for presentation with the electronic document.

The event data can also include a search query that was submitted from the client device 106 to obtain a search results page or a response in a conversational user interface. For example, an AI agent or other form of a chat agent can provide a conversational user interface in which users can provide natural language queries, which can be in the form of prompts for a language model, and receive responses to the queries. The user can refine their expression of their informational needs as the conversation progresses and the AI agent can send component requests 112 with the updated queries. In such examples, the AI agent can include a user session identifier in the component requests so that the service apparatus 110 can correlate queries included in multiple component requests 112 for the same user session with the AI agent and use this information in generating customized digital components.

Component requests 112 can also include event data related to other information, such as information that a user of the client device has provided, geographic information indicating a state or region from which the component request was submitted, or other information that provides context for the environment in which the digital component will be displayed (e.g., a time of day of the component request, a day of the week of the component request, a type of device at which the digital component will be displayed, such as a mobile device or tablet device). Component requests 112 can be transmitted, for example, over a packetized network, and the component requests 112 themselves can be formatted as packetized data having a header and payload data. The header can specify a destination of the packet and the payload data can include any of the information discussed above.

The service apparatus 110 chooses digital components (e.g., third-party content, such as video files, audio files, images, text, gaming content, augmented reality content, and combinations thereof, which can all take the form of advertising content or non-advertising content) that will be presented with the given electronic document (e.g., at a location specified by the script 154) in response to receiving the component request 112 and/or using information included in the component request 112. In some implementations, choosing a digital component includes choosing a customizable digital component that can be customized based on various data, as described in more detail below.

In some implementations, a digital component is selected in less than a second to avoid errors that could be caused by delayed selection of the digital component. For example, delays in providing digital components in response to a component request 112 can result in page load errors at the client device 106 or cause portions of the electronic document to remain unpopulated even after other portions of the electronic document are presented at the client device 106.

Also, as the delay in providing the digital component to the client device 106 increases, it is more likely that the electronic document will no longer be presented at the client device 106 when the digital component is delivered to the client device 106, thereby negatively impacting a user's experience with the electronic document. Further, delays in providing the digital component can result in a failed delivery of the digital component, for example, if the electronic document is no longer presented at the client device 106 when the digital component is provided. The described techniques are adapted to generate a customized digital component in a short amount of time such that these errors and user experience impact are reduced or eliminated.

In some implementations, the service apparatus 110 is implemented in a distributed computing system that includes, for example, a server and a set of multiple computing devices 114 that are interconnected and identify and distribute digital component in response to requests 112. The set of multiple computing devices 114 operate together to identify a set of digital components that are eligible to be presented in the electronic document from among a corpus of millions of available digital components (DC₁₋ₓ). The millions of available digital components can be indexed, for example, in a digital component database 116. Each digital component index entry can reference the corresponding digital component and/or include distribution parameters (DP₁-DPₓ) that contribute to (e.g., trigger, condition, or limit) the distribution/transmission of the corresponding digital component. For example, the distribution parameters can contribute to (e.g., trigger) the transmission of a digital component by requiring that a component request include at least one criterion that matches (e.g., either exactly or with some pre-specified level of similarity) one of the distribution parameters of the digital component.

In some implementations, the distribution parameters for a particular digital component can include distribution keywords that must be matched (e.g., by electronic documents, document keywords, and/or terms specified in the component request 112) in order for the digital component to be eligible for presentation. Additionally, or alternatively, the distribution parameters can include embeddings that can use various different dimensions of data, such as website details and/or consumption details (e.g., page viewport, user scrolling speed, or other information about the consumption of data). The distribution parameters can also require that the component request 112 include information specifying a particular geographic region (e.g., country or state) and/or information specifying that the component request 112 originated at a particular type of client device (e.g., mobile device or tablet device) in order for the digital component to be eligible for presentation. The distribution parameters can also specify an eligibility value (e.g., ranking score, or some other specified value) that is used for evaluating the eligibility of the digital component for distribution/transmission (e.g., among other available digital components).

The identification of the eligible digital component can be segmented into multiple tasks 117a-117c that are then assigned among computing devices within the set of multiple computing devices 114. For example, different computing devices in the set 114 can each analyze a different portion of the digital component database 116 to identify various digital components having distribution parameters that match information included in the component request 112. In some implementations, each given computing device in the set 114 can analyze a different data dimension (or set of dimensions) and pass (e.g., transmit) results (Res 1-Res 3) 118a-118c of the analysis back to the service apparatus 110. For example, the results 118a-118c provided by each of the computing devices in the set 114 may identify a subset of digital components that are eligible for distribution in response to the component request and/or a subset of the digital component that have certain distribution parameters. The identification of the subset of digital components can include, for example, comparing the event data to the distribution parameters, and identifying the subset of digital components having distribution parameters that match at least some features of the event data.

The service apparatus 110 aggregates the results 118a-118c received from the set of multiple computing devices 114 and uses information associated with the aggregated results to select one or more digital components that will be provided in response to the request 112. For example, the service apparatus 110 can select a set of winning digital components (one or more digital components) based on the outcome of one or more content evaluation processes, as discussed below. In turn, the service apparatus 110 can generate and transmit, over the network 102, reply data 120 (e.g., digital data representing a reply) that enable the client device 106 to integrate the set of winning digital components into the given electronic document, such that the set of winning digital components (e.g., winning third-party content) and the content of the electronic document are presented together at a display of the client device 106. In some implementations, the client device 106 executes instructions included in the reply data 120, which configures and enables the client device 106 to obtain the set of winning digital components from one or more digital component servers 108. For example, the instructions in the reply data 120 can include a network location (e.g., a Uniform Resource Locator (URL)) and a script that causes the client device 106 to transmit a server request (SR) 121 to the digital component server 108 to obtain a given winning digital component from the digital component server 108. In response to the request, the digital component server 108 will identify the given winning digital component specified in the server request 121 (e.g., within a database storing multiple digital components) and transmit, to the client device 106, digital component data (DC Data) 122 that presents the given winning digital component in the electronic document at the client device 106.

When the client device 106 receives the digital component data 122, the client device will render the digital component (e.g., third-party content), and present the digital component at a location specified by, or assigned to, the script 154. For example, the script 154 can create a walled garden environment, such as a frame, that is presented within, e.g., beside, the native content 152 of the electronic document 150. In some implementations, the digital component is overlayed over (or adjacent to) a portion of the native content 152 of the electronic document 150, and the service apparatus 110 can specify the presentation location within the electronic document 150 in the reply 120. For example, when the native content 152 includes video content, the service apparatus 110 can specify a location or object within the scene depicted in the video content over which the digital component is to be presented.

The service apparatus 110 can also include an AI system 160 configured to autonomously generate images, e.g., image digital components, either prior to a component request 112 (e.g., offline) and/or in response to a request 112 (e.g., online or real-time). For example, the AI system 160 can generate images in an offline or online process using content items received from a digital component provider. As described above the content items can include text, one or more images, logos, graphics, interactive elements (e.g., buttons, icons, etc.), and/or other types of visual content. For example, a digital component provider can provide, to the service apparatus 110, a set of content items for use in generating digital components for an item (e.g., a product or service) or for a digital component distribution effort for one or more items.

The AI system 160 can use one or more AI models, e.g., one or more machine learning models, to generate images based on input prompts and/or content items, which can be received from digital component providers or other users that request image creation by the AI system 160. One or more of the machine learning models trained and/or used by the AI system 160 can include language models 170, e.g., large language models. A large language model ("LLM") is a model that is trained to generate and understand human language. LLMs are trained on massive datasets of text and code, and they can be used for a variety of tasks. For example, LLMs can be trained to translate text from one language to another; summarize text, such as web site content, search results, news articles, or research papers; answer questions about text, such as "What is the capital of Georgia?"; create chatbots that can have conversations with humans; and generate creative text, such as poems, stories, and code.

The language model(s) 170 can be any appropriate language model neural network that receives an input sequence made up of text tokens selected from a vocabulary and auto-regressively generates an output sequence made up of text tokens from the vocabulary. For example, the language model 170 can be a Transformer-based language model neural network or a recurrent neural network-based language model.

In some situations, a language model 170 can be referred to as an auto-regressive neural network when the neural network used to implement the language model 170 auto-regressively generates an output sequence of tokens. More specifically, the auto-regressively generated output is created by generating each particular token in the output sequence conditioned on a current input sequence that includes any tokens that precede the particular text token in the output sequence, i.e., the tokens that have already been generated for any previous positions in the output sequence that precede the particular position of the particular token, and a context input that provides context for the output sequence.

For example, the current input sequence when generating a token at any given position in the output sequence can include the input sequence and the tokens at any preceding positions that precede the given position in the output sequence. As a particular example, the current input sequence can include the input sequence followed by the tokens at any preceding positions that precede the given position in the output sequence. Optionally, the input and the current output sequence can be separated by one or more predetermined tokens within the current input sequence.

More specifically, to generate a particular token at a particular position within an output sequence, the neural network of the language model 170 can process the current input sequence to generate a score distribution, e.g., a probability distribution, that assigns a respective score, e.g., a respective probability, to each token in the vocabulary of tokens. The neural network of the language model 170 can then select, as the particular token, a token from the vocabulary using the score distribution. For example, the neural network of the language model 170 can greedily select the highest-scoring token or can sample, e.g., using nucleus sampling or another sampling technique, a token from the distribution.

As a particular example, the language model 170 can be an auto-regressive Transformer-based neural network that includes (i) a plurality of attention blocks that each apply a self-attention operation and (ii) an output subnetwork that processes an output of the last attention block to generate the score distribution.

A language model can have any of a variety of Transformer-based neural network architectures. Examples of such architectures include those described in J. Hoffmann, S. Borgeaud, A. Mensch, E. Buchatskaya, T. Cai, E. Rutherford, D. d. L. Casas, L. A. Hendricks, J. Welbl, A. Clark, et al. Training compute-optimal large language models, arXiv preprint arXiv:2203.15556, 2022; J.W. Rae, S. Borgeaud, T. Cai, K. Millican, J. Hoffmann, H. F. Song, J. Aslanides, S. Henderson, R. Ring, S. Young, E. Rutherford, T. Hennigan, J. Menick, A. Cassirer, R. Powell, G. van den Driessche, L. A. Hendricks, M. Rauh, P. Huang, A. Glaese, J. Welbl, S. Dathathri, S. Huang, J. Uesato, J. Mellor, I. Higgins, A. Creswell, N. McAleese, A. Wu, E. Elsen, S. M. Jayakumar, E. Buchatskaya, D. Budden, E. Sutherland, K. Simonyan, M. Paganini, L. Sifre, L. Martens, X. L. Li, A. Kuncoro, A. Nematzadeh, E. Gribovskaya, D. Donato, A. Lazaridou, A. Mensch, J. Lespiau, M. Tsimpoukelli, N. Grigorev, D. Fritz, T. Sottiaux, M. Pajarskas, T. Pohlen, Z. Gong, D. Toyama, C. de Masson d'Autume, Y. Li, T. Terzi, V. Mikulik, I. Babuschkin, A. Clark, D. de Las Casas, A. Guy, C. Jones, J. Bradbury, M. Johnson, B. A. Hechtman, L. Weidinger, I. Gabriel, W. S. Isaac, E. Lockhart, S. Osindero, L. Rimell, C. Dyer, O. Vinyals, K. Ayoub, J. Stanway, L. Bennett, D. Hassabis, K. Kavukcuoglu, and G. Irving. Scaling language models: Methods, analysis & insights from training gopher. CoRR, abs/2112.11446, 2021; Colin Raffel, Noam Shazeer, Adam Roberts, Katherine Lee, Sharan Narang, Michael Matena, Yanqi Zhou, Wei Li, and Peter J Liu. Exploring the limits of transfer learning with a unified text-to-text transformer. arXiv preprint arXiv:1910.10683, 2019; Daniel Adiwardana, Minh-Thang Luong, David R. So, Jamie Hall, Noah Fiedel, Romal Thoppilan, Zi Yang, Apoorv Kulshreshtha, Gaurav Nemade, Yifeng Lu, and Quoc V. Le. Towards a human-like open-domain chatbot. CoRR, abs/2001.09977, 2020; and Tom B Brown, Benjamin Mann, Nick Ryder, Melanie Subbiah, Jared Kaplan, Prafulla Dhariwal, Arvind Neelakantan, Pranav Shyam, Girish Sastry, Amanda Askell, et al. Language models are fewshot learners. arXiv preprint arXiv:2005.14165, 2020.

Generally, however, the Transformer-based neural network includes a sequence of attention blocks, and, during the processing of a given input sequence, each attention block in the sequence receives a respective input hidden state for each input token in the given input sequence. The attention block then updates each of the hidden states at least in part by applying self-attention to generate a respective output hidden state for each of the input tokens. The input hidden states for the first attention block are embeddings of the input tokens in the input sequence and the input hidden states for each subsequent attention block are the output hidden states generated by the preceding attention block.

In this example, the output subnetwork processes the output hidden state generated by the last attention block in the sequence for the last input token in the input sequence to generate the score distribution.

Generally, because the language model 170 is auto-regressive, the service apparatus 110 can use the same language model 170 to generate multiple different candidate output sequences in response to the same request, e.g., by using beam search decoding from score distributions generated by the language model, using a Sample-and-Rank decoding strategy, by using different random seeds for the pseudo-random number generator that's used in sampling for different runs through the language model 170 or using another decoding strategy that leverages the auto-regressive nature of the language model 170.

In some implementations, the language model 170 is pre-trained, e.g., trained on a language modeling task that does not require providing evidence in response to user questions, and the service apparatus 110 (e.g., using AI system 160) causes the language model to generate output sequences according to the pre-determined syntax through natural language prompts in the input sequence.

For example, the service apparatus 110 (e.g., AI system 160), or a separate training system, pre-trains a language model (e.g., the neural network) on a language modeling task, e.g., a task that requires predicting, given a current sequence of text tokens, the next token that follows the current sequence in the training data. As a particular example, the language model 170 can be pre-trained on a maximum-likelihood objective on a large dataset of text, e.g., text that is publicly available from the Internet or another text corpus.

The AI system 160 is configured to train and use one or more AI models, e.g., language models 170, neural networks, etc. to generate image data for new images, e.g., for new image digital components. In some implementations, the AI system 160 trains an image parser model to generate parsed image data and an image design model to generate image data for new image digital components using content items for the images. The parsed image data generated by the image parser model can include, for example, a set of content items depicted in the image and a structured representation of the content items. The image data generated by the image design model can include, for example, a structured representation for an input set of content items provided as input to the image design model. The service apparatus 110 can distribute these image digital components to the client devices 106, e.g., using distribution parameters for the image digital components as described above.

For example, a digital component provider can provide to the service apparatus 110 a set of content items and distribution parameters for a new digital component distribution effort (e.g., a digital component campaign). The AI system 160 can use the image design model to generate digital components using the set of content items as input. The AI system 160 can then distribute these digital components to the client devices 160 using the distribution parameters.

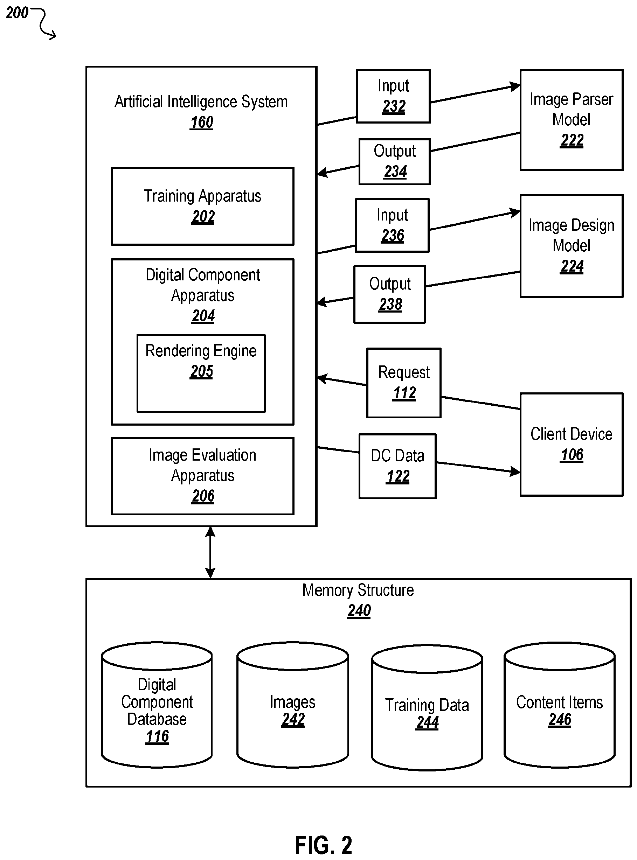

FIG. 2 is a block diagram illustrating interactions between an artificial intelligence system 160, an image parser model 222, an image design model 224, and a client device 106. In this example, the AI system 160 includes a training apparatus 202, a digital component apparatus 204, and an image evaluation apparatus 206. Each apparatus 202, 204, and 206 can be implemented as one or more computers in one or more locations. In some implementations, two or more of the apparatus 202, 204, and 206 can be implemented using the same apparatus (e.g., the same one or more computers).

The AI system 160 can be configured to interact with a memory structure 240 to extract and/or store information and content. In particular, the memory structure 240 can store the digital component database 116, images 242, training data 244, and content items 246.

The digital component database 116 can store rich data about the digital components indexed in the digital component database 116. For example, the digital component database 116 can store digital component data 122 and/or other data that can be used by a client device 106 to render the digital components. In a particular example, the digital component database 116 can store, for at least some of the digital components, a set of content items used to render the digital component and a corresponding structured representation that can indicate to the client device 106 how to arrange the set of content items to render the digital component.

The images 242 can include static images for which rich data, e.g., a structured representation of content items of the static image, is not available. For example, the AI system 160 can obtain these images 242 in their rendered form, e.g., from online resources or from digital component providers.

As described below, the AI system 160 can generate at least some of the training data 244 using the static images. The training data 244 can also include the rich data stored in the digital component database 116.

The content items 246 can include content items received from digital component providers. As described above, a digital component provider can provide a set of content items for use in generating digital components for an item (e.g., a product or service) or for a digital component distribution effort for one or more items. The content items 246 can include text, one or more images, logos, graphics, interactive elements (e.g., buttons, icons, etc.), and/or other types of visual content.

The training apparatus 202 is configured to train the image parser model 222 and the image design model 224. The image parser model 222 is trained to output parsed image data based on an input image. The parsed image data can include, for example, a set of content items depicted by the input image and a structured representation of the content items in the input image. The structured representation can specify the arrangement of each content item to form a new image, the color(s) depicted by each content item, the size of each content item (e.g., in number of pixels or in pixel dimensions), and/or other characteristics of the image.

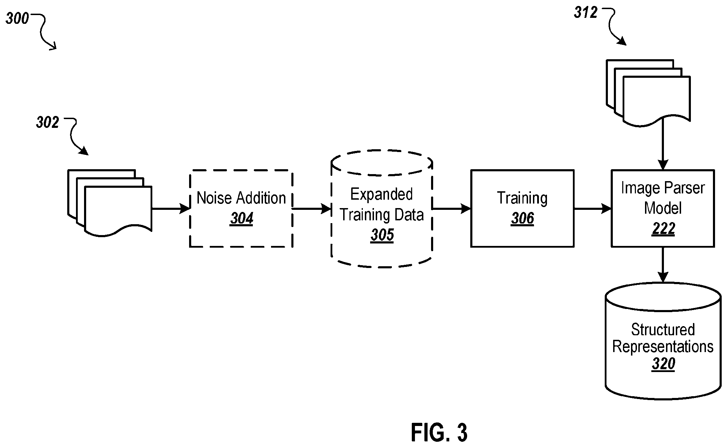

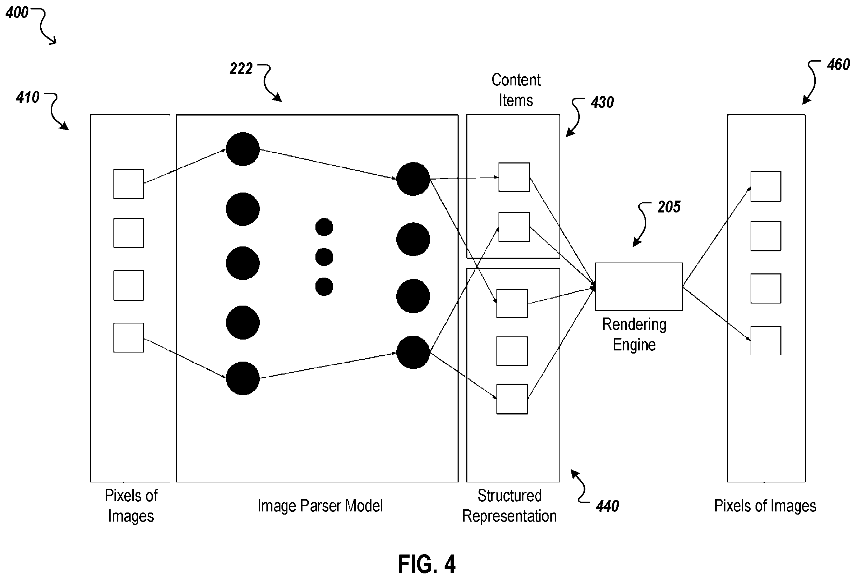

In some implementations, the image parser model 222 is a neural network or language model. The training apparatus 202 can train the image parser model 222 using supervised learning techniques or using reinforcement learning (e.g., RLNN) techniques. An example process of training the image parser model 222 using supervised learning is shown in FIG. 3 and described below. An example process for training the image parser model 222 using RLNN is shown in FIG. 4 and described below.

In RLNN techniques, the image parser model 222 can be trained to minimize the difference between an input static image and a rendered image that is rendered based on the output of the image parser model 222. The image evaluation apparatus 206 can evaluate each input image and rendered image pair to determine a measure of the difference between the two images during this training process. For example, the image evaluation apparatus 206 can evaluate the difference between the pixels of the two images to determine the measure of difference between the two images. The measure of difference can be an aggregation of (e.g., sum, mean, median, or other measure of central tendency of) differences in characteristics (e.g., color, intensity, etc.) between each corresponding pixel of the two images.

The training apparatus 202 can use the trained image parser model 222 to generate training data 244 for use in training the image design model 224. For example, the training apparatus 222 can provide, to the image parser model 222, inputs 232 in the form of static images. The image parser model 222 is trained to provide, for each input 232, an output 234 that includes parsed image data for the input static image. The parsed image data, which can include a set of content items depicted by the input static image and the structured representation of the set of content items, can be stored along with the static image as training data 244 for training the image design model 224. Generating such rich training data using static images allows for a substantial amount of training data 244 for the image design model 224.

The image design model 224 is trained to output image data that includes a structured representation of a set of input content items. In some implementations, the image design model 224 is a neural network or language model. The training apparatus 202 can train the image design model 224 using supervised learning techniques. For example, the training apparatus 202 can train the image design model 224 by optimizing a loss function using labeled training samples. Each training sample can include features that include a static image and a set of content items depicted by the image. Each training sample can also include a label that indicates the structured representation of the content items in the rendered static image.

The digital component apparatus 204 is configured to use the image design model 114 to generate new images, e.g., new image digital components. For example, the digital component apparatus 204 can provide, as an input 236 to the image design model 224, a set of content items for an item or digital component distribution effort. The image design model 224 can provide an output 224 that includes a structured representation (e.g., arrangement and/or characteristics) of the set of content items that can be used to generate an image digital component.

The digital component apparatus 204 includes a rendering engine 205 that is configured to render images based on a set of content items and a structured representation of the content items. For example, the rendering engine 205 can use the structured representation to arrange the set of content items within a bounded area to form an image. If the structured representation indicates other characteristics of the content items, e.g., the color, size, or shape of the content items, the rendering engine 205 can adjust the content items according to their characteristics when rendering the content items within the image.

In some implementations, the structured representation is in a defined structural format, e.g., a JSON format. The rendering image 205 can be configured to read the appropriate data from the defined structural format and use that data for render the content items within the image.

In some implementations, the content items are considered layers within an image. For example, when parsing a static image into content items and structured representations, the imager parser model 222 can output a set of layers and a structured representation of the layers. Each layer can be for a particular content item detected in the static image. The structured representation can indicate the location of each layer in the image (e.g., using coordinates or relative locations) and/or the location of each content item within its layer. For example, if the image parser model 222 identifies nine content items and thus nine layers in the static image, the image parser model 222 can output the content items in a layered representation, e.g., a 3x3 layered representation with three rows and three columns. Similarly, the rendering image 205 can be configured to render images based on a layered representation of the content items. Example rendering engines include Lottie, HTML, and Latex, to name a few. The digital component apparatus 204 can render the image in various formats, e.g., HTML, PNG, JPG, GIF, etc.

The digital component apparatus 204 can store the new image digital components in the digital component database 116 with a reference to their distribution parameters. In some implementations, the digital component apparatus 204 generates digital component data 122 for each new image to enable client devices 106 to render the image digital component. In addition to the rendered image, the digital component data 122 can include a link to a landing page for the item corresponding to the digital component, a script that causes the client devices 106 to navigate to the landing page in response to user interaction with the image digital component, and/or other data that can be used by a client device 106 to render the image digital component.

The services apparatus 110 can distribute the image digital components to client device 106, e.g., in response to component requests 112 received from the client devices 106. If an image digital component is selected for distribution to a client device 106, the service apparatus 110 can provide the digital component data 122 for the image digital component to the client device 106.

FIG. 3 is a block diagram of an example process 300 for training an image parser model 222 and using the image parser model 122 to generate structured representations of images. Operations of the process 300 can be performed, for example, by the service apparatus 110 of FIG. 1 (e.g., by the AI system 160), or another data processing apparatus. The operations of the process 300 can also be implemented as instructions stored on a computer readable medium, which can be non-transitory. Execution of the instructions, by one or more data processing apparatus, causes the one or more data processing apparatus to perform operations of the process 300. For brevity, the process 300 is described in terms of being performed by a system.

The system obtains training data 302 for use in training the image parser model 222. This training data 302 can include training samples. Each training sample can include a rendered image, a set of content items depicted in the image, and a structured representation of the content items depicted in the image. The system can obtain the training data 302 from a digital component database 116 or other source of rich data for images.

The system can optionally expand the training data 302 to generate expanded training data 305 by generating additional training samples using noise techniques. For example, the system can apply noise to images and associated data in the training data 302 by adjusting one or more of a color, size, location, geometric decorations, transparencies, special effects (e.g., water splash parameters), or other characteristic of the image and/or a content item depicted by the image, e.g., by adjusting the structured representation of the content items depicted by the image. In a particular example, the image data 302 can include a training sample that includes an image of a red truck in front of a mountain, the set of content items depicted in this image (e.g., an image of the truck, an image of the mountain, etc.) and a structured representation of the content items. The system can generate additional training samples using this one image by adjusting the color of the truck and/or moving the truck to either side of the mountain or on the mountain. By applying noise in this way, the system can generate a substantial amount of additional training samples that can be used to train the image parser model 222.

For each newly created training sample, the system can render a new image using the adjusted structured representation and/or adjusted content item(s). Each created training sample can include the rendered image and corresponding content items and structured representation.

The system trains the image parser model 222 using the training data 302 or the expanded training data 205. For example, the system can train the image parser model 222 using supervised learning techniques where the label is the structured representation and set of content items and the features are the rendered image. Thus, the image parser model 222 is trained to output a set of content items and structured representation of the content items for input static images.

Once trained, the system can use the image parser model 222 to parse static images 312 into content items and corresponding structured representations 320. The system can obtain the input images from one or more of various sources, e.g., from digital component providers, online resources (e.g., web pages), etc. The system can provide each static image as input to the image parser model 222 and receive, for each static image, and output of the image parser model 222. The output for each static image can include the content items depicted by the image and the corresponding structured representations 320 of the content items.

FIG. 4 is a block diagram of an example process 400 for training an image parser model 222. In this example, the system trains the image parser model 222 using reinforcement learning (e.g., RLNN) techniques. Operations of the process 400 can be performed, for example, by the service apparatus 110 of FIG. 1 (e.g., by the AI system 160), or another data processing apparatus. The operations of the process 400 can also be implemented as instructions stored on a computer readable medium, which can be non-transitory. Execution of the instructions, by one or more data processing apparatus, causes the one or more data processing apparatus to perform operations of the process 400. For brevity, the process 400 is described in terms of being performed by a system.

The system can train the image parser model 122 based on characteristics of pixels of input images 410 to output the content items and structured representations of the content items. The characteristics of the pixels can include, for example, the color and/or intensity of each pixel in an input image 410. The input images 410 can be static images.

The system can train the image parser model 222 to minimize the difference between an input image 410 and a rendered image 460 that is rendered based on the output of the image parser model 222. For example, the system can train the image parser model 222 by optimizing a loss function based on the difference between pixels of input images 410 and pixels of rendered output images 460.

During training, the system can process pixels of an input image 410 using the image parser model 222 to output content items 430 and a structured representation 440 of the content items identified by the image parser model 222 as being depicted by the input image 410. The system can then use the rendering engine 205 to render an output image 460 based on the output content items 430 and a structured representation 440 of the content items identified by the image parser model 222.

The system can then use the image evaluation apparatus 206 to evaluate the input image 410 and the rendered output image 460 to determine a measure of the difference between the two images. For example, the image evaluation apparatus 206 can evaluate the difference between the pixels of the two images to determine the measure of difference between the two images. As described above, the measure of difference can be an aggregation of (e.g., sum, mean, median, or other measure of central tendency of) differences in characteristics (e.g., color, intensity, etc.) between each corresponding pixel of the two images.

The system can then adjust the parameters (e.g., weights and biases) of the image parser model 222 based on the measure of difference. The system can train the image parser model 222 in this way using many static images until the measure of difference reaches an acceptable stopping point. In some implementations, the stopping point for training the model can be based on straining steps/epochs, loss function values, and/or evaluation metrics.

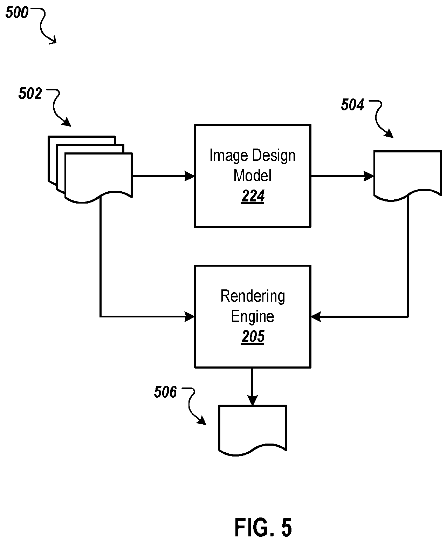

FIG. 5 is a block diagram of an example process 500 for generating images using an image design model 224. Operations of the process 500 can be performed, for example, by the service apparatus 110 of FIG. 1 (e.g., by the AI system 160), or another data processing apparatus. The operations of the process 500 can also be implemented as instructions stored on a computer readable medium, which can be non-transitory. Execution of the instructions, by one or more data processing apparatus, causes the one or more data processing apparatus to perform operations of the process 500. For brevity, the process 500 is described in terms of being performed by a system.

The system obtains content items 502 for a new image. In some implementations, the content items are received in the form of vectors or bytes of data representing text, images, graphics, logos, and/or other types of content items. The content items can be received from a digital component provider.

The system provides the content items as input to an image design model 224 that is trained to output a structured representation for a new image design based on input content items. The image design model 224 can process the input content items 502 and output a structured representation 504 for the content items.

The rendering engine 205 can then generate a new image 506 using the content items 502 and the structured representation 504. For example, the rendering engine 205 can arrange the content items 502 within an image based on the structured representation 504 output by the image design model 224.

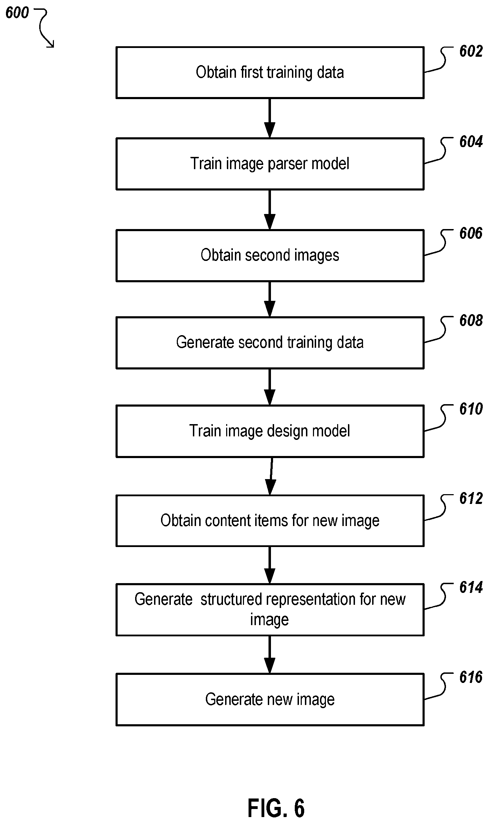

FIG. 6 is a flow chart of an example process 600 of generating images using an image parser model and an image design model. Operations of the process 600 can be performed, for example, by the service apparatus 110 of FIG. 1 (e.g., by the AI system 160), or another data processing apparatus. The operations of the process 600 can also be implemented as instructions stored on a computer readable medium, which can be non-transitory. Execution of the instructions, by one or more data processing apparatus, causes the one or more data processing apparatus to perform operations of the process 600. For brevity, the process 600 is described in terms of being performed by a system.

The system obtains first training data that includes a set of first training samples (602). Each first training sample can include a first image. Each first training sample can also include a set of content items depicted by the first image and a structured representation of the content items depicted by the first image.

The system trains, using the first training data, an image parser model to output structured representations of input images (604). As described above, the system can train the image parser model using supervised learning or reinforcement learning. In some implementations, the system uses expanded training data to train the image parser model. For example, the system can use noise techniques to generate new training samples from the first training samples, as described above.

The system obtains a set of second images (606). The second images can include static images for which rich data (e.g., data indicating content items and structured representation of the content items in the image) is not available.

The system processes the second images using the image parser model to generate second training data that includes a set of second training samples (608). For example, the system can provide each static image as an input to the image parser model and the image parsed model can output the content items depicted in the image and the structured representation of the content items in the second image. Each second training sample can include a second image and a corresponding structured representation of content items depicted by the second image output by the image parser model based on the second image. Each training sample can also include the set of content items depicted by the second image as output by the image parser model.

The system trains, using the second training data, an image design model to output a structured representation for an input that includes a set of content items (610). As described above, the image design model can be trained using supervised learning.

The system obtains a new set of content items for a new image (612). For example, a digital component provider and provide the set of content items for the new image to the system.

The system processes the set of content items for the new image using the image design model to generate a corresponding new structured representation for the new image (614). For example, the system can provide the set of content items as input to the image design model and receive as an output of the image design model a new structured representation for the content items to generate a new image.

The system generates the new image using the set of content items and the new structured representation (616). For example, a rendering image can render the content items within the image according to the structured representation output by the image design model.

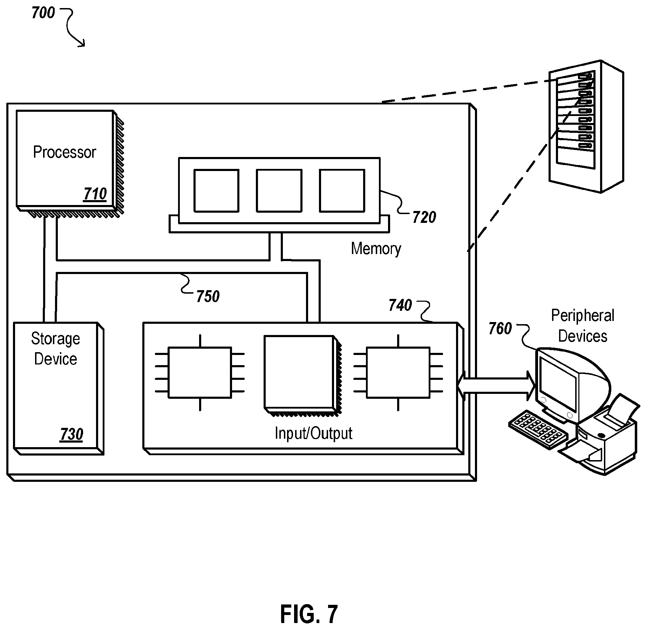

FIG. 7 is a block diagram of an example computer system 700 that can be used to perform operations described above. The system 700 includes a processor 710, a memory 720, a storage device 730, and an input/output device 740. Each of the components 710, 720, 730, and 740 can be interconnected, for example, using a system bus 750. The processor 710 is capable of processing instructions for execution within the system 700. In one implementation, the processor 710 is a single-threaded processor. In another implementation, the processor 710 is a multi-threaded processor. The processor 710 is capable of processing instructions stored in the memory 720 or on the storage device 730.

The memory 720 stores information within the system 700. In one implementation, the memory 720 is a computer-readable medium. In one implementation, the memory 520 is a volatile memory unit. In another implementation, the memory 720 is a non-volatile memory unit.

The storage device 730 is capable of providing mass storage for the system 700. In one implementation, the storage device 730 is a computer-readable medium. In various different implementations, the storage device 730 can include, for example, a hard disk device, an optical disk device, a storage device that is shared over a network by multiple computing devices (e.g., a cloud storage device), or some other large capacity storage device.

The input/output device 740 provides input/output operations for the system 700. In one implementation, the input/output device 740 can include one or more of a network interface devices, e.g., an Ethernet card, a serial communication device, e.g., and RS-232 port, and/or a wireless interface device, e.g., and 802.11 card. In another implementation, the input/output device can include driver devices configured to receive input data and send output data to other devices, e.g., keyboard, printer, display, and other peripheral devices 760. Other implementations, however, can also be used, such as mobile computing devices, mobile communication devices, set-top box television client devices, etc.

Although an example processing system has been described in FIG. 7, implementations of the subject matter and the functional operations described in this specification can be implemented in other types of digital electronic circuitry, or in computer software, firmware, or hardware, including the structures disclosed in this specification and their structural equivalents, or in combinations of one or more of them.

An electronic document (which for brevity will simply be referred to as a document) does not necessarily correspond to a file. A document may be stored in a portion of a file that holds other documents, in a single file dedicated to the document in question, or in multiple coordinated files.

For situations in which the systems discussed here collect and/or use personal information about users, the users may be provided with an opportunity to enable/disable or control programs or features that may collect and/or use personal information (e.g., information about a user's social network, social actions or activities, a user's preferences, or a user's current location). In addition, certain data may be treated in one or more ways before it is stored or used, so that personally identifiable information associated with the user is removed. For example, a user's identity may be anonymized so that the no personally identifiable information can be determined for the user, or a user's geographic location may be generalized where location information is obtained (such as to a city, ZIP code, or state level), so that a particular location of a user cannot be determined.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, i.e., one or more modules of computer program instructions, encoded on computer storage medium for execution by, or to control the operation of, data processing apparatus. Alternatively, or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially-generated propagated signal. The computer storage medium can also be, or be included in, one or more separate physical components or media (e.g., multiple CDs, disks, or other storage devices).

The operations described in this specification can be implemented as operations performed by a data processing apparatus on data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application-specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures.

This document refers to a service apparatus. As used herein, a service apparatus is one or more data processing apparatus that perform operations to facilitate the distribution of content over a network. The service apparatus is depicted as a single block in block diagrams. However, while the service apparatus could be a single device or single set of devices, this disclosure contemplates that the service apparatus could also be a group of devices, or even multiple different systems that communicate in order to provide various content to client devices. For example, the service apparatus could encompass one or more of a search system, a video streaming service, an audio streaming service, an email service, a navigation service, an advertising service, a gaming service, or any other service.

A computer program (also known as a program, software, software application, script, or code) can be written in any form of programming language, including compiled or interpreted languages, declarative or procedural languages, and it can be deployed in any form, including as a stand-alone program or as a module, component, subroutine, object, or other unit suitable for use in a computing environment. A computer program may, but need not, correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub-programs, or portions of code). A computer program can be deployed to be executed on one computer or on multiple computers that are located at one site or distributed across multiple sites and interconnected by a communication network.

The processes and logic flows described in this specification can be performed by one or more programmable processors executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for performing actions in accordance with instructions and one or more memory devices for storing instructions and data. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device (e.g., a universal serial bus (USB) flash drive), to name just a few. Devices suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in, special purpose logic circuitry.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's client device in response to requests received from the web browser.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface or a Web browser through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network ("LAN") and a wide area network ("WAN"), an internetwork (e.g., the Internet), and peer-to-peer networks (e.g., ad hoc peer-to-peer networks).

The computing system can include clients and servers. A client and server are generally remote from each other and typically interact through a communication network. The relationship of client and server arises by virtue of computer programs running on the respective computers and having a client-server relationship to each other. In some embodiments, a server transmits data (e.g., an HTML page) to a client device (e.g., for purposes of displaying data to and receiving user input from a user interacting with the client device). Data generated at the client device (e.g., a result of the user interaction) can be received from the client device at the server.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

## Claims

1. A method (600) comprising:
obtaining (602) first training data comprising a set of first training samples, wherein each first training sample comprises a first image;
training (604), using the first training data, an image parser model (222) to output structured representations of input images;
obtaining (606) a set of second images;
processing the second images using the image parser model to generate (608) second training data comprising a set of second training samples, wherein each second training sample comprises a second image and a corresponding structured representation of content items depicted by the second image output by the image parser model based on the second image;
training (610), using the second training data, an image design model (224) to output a structured representation for an input comprising a set of content items, the set of content items comprising at least one of text or one or more images;
obtaining (612) a new set of content items (502) for a new image;
processing the set of content items for the new image using the image design model to generate (614) a corresponding new structured representation (504) for the new image; and
generating (616) the new image using the set of content items and the new structured representation.

2. The method of claim 1, further comprising distributing the new image to one or more client devices.

3. The method of claim 1 or 2, wherein each structured representation indicates locations at which content is depicted by the image corresponding to the structured representation.

4. The method of any preceding claim, wherein obtaining the first training data comprises generating additional first training samples in the first training data by adding noise to the first images, corresponding structured representations of the content items depicted by the first images, or both.

5. The method of claim 4, wherein generating additional first training samples in the first training data by adding noise to the first images, the corresponding structured representations of the content items depicted by the first images, or both comprises generating an additional first training sample by adjusting one or more of a color, size, or location of a content item of a given first image.

6. The method of any preceding claim, wherein the image parser comprises a neural network that comprises a first sub-neural network trained to split a rendering into multiple layers and a second sub-neural network trained to convert the multiple layers into content items and a corresponding structured representation.

7. The method of any preceding claim, wherein:
each first training sample comprises a corresponding structured representation of content items depicted by the first image of the first training sample; and
training, using the first training data, the image parser model to output structured representations of input images comprises training the image parser model using supervised learning.

8. The method of any one of claims 1 to 6, wherein training, using the first training data, the image parser model to output structured representations of input images comprises training the image parser model to optimize a loss function based on a difference between each first image and a rendered image that is rendered based on a structured representation of the first image output by the image parser model.

9. A system (700) comprising:
one or more processors (710); and
one or more storage devices (730) storing instructions that, when executed by the one or more processors, cause the one or more processors to carry out the method of any preceding claim.

10. A computer readable storage medium carrying instructions that, when executed by one or more processors, cause the one or more processors to carry out the method of any one of claims 1 to 8.

11. A computer program product comprising instructions which, when executed by one or more computers, cause the one or more computers to carry out the steps of the method of any of claims 1 to 8.

## Patentansprüche

1. Verfahren (600), umfassend:
Erhalten (602) von ersten Trainingsdaten, die einen Satz von ersten Trainings-Samples umfassen, wobei jedes erste Trainings-Sample ein erstes Bild umfasst;
Trainieren (604), unter Verwendung der ersten Trainingsdaten, eines Bild-Parser-Modells (222), um strukturierte Repräsentationen von Eingabebildern auszugeben; Erhalten (606) eines Satzes von zweiten Bildern;
Verarbeiten der zweiten Bilder unter Verwendung des Bild-Parser-Modells, um zweite Trainingsdaten zu erzeugen (608), die einen Satz von zweiten Trainings-Samples umfassen, wobei jedes zweite Trainings-Sample ein zweites Bild und eine entsprechende strukturierte Repräsentation von Inhaltselementen umfasst, die durch das zweite Bild dargestellt werden, die durch das Bild-Parser-Modell basierend auf dem zweiten Bild ausgegeben wird;
Trainieren (610), unter Verwendung der zweiten Trainingsdaten, eines Bild-Design-Modells (224), um eine strukturierte Repräsentation für eine Eingabe auszugeben, die einen Satz von Inhaltselementen umfasst, wobei der Satz von Inhaltselementen mindestens eines von Text oder einem oder mehreren Bildern umfasst;
Erhalten (612) eines neuen Satzes von Inhaltselementen (502) für ein neues Bild;
Verarbeiten des Satzes von Inhaltselementen für das neue Bild unter Verwendung des Bild-Design-Modells, um eine entsprechende neue strukturierte Repräsentation (504) für das neue Bild zu erzeugen (614); und
Erzeugen (616) des neuen Bildes unter Verwendung des Satzes von Inhaltselementen und der neuen strukturierten Repräsentation.

2. Verfahren nach Anspruch 1, ferner umfassend Verteilen des neuen Bildes an eine oder mehrere Client-Vorrichtungen.

3. Verfahren nach Anspruch 1 oder 2, wobei jede strukturierte Repräsentation Orte angibt, an denen Inhalt durch das Bild dargestellt wird, das der strukturierten Repräsentation entspricht.

4. Verfahren nach einem der vorhergehenden Ansprüche, wobei Erhalten der ersten Trainingsdaten Erzeugen von zusätzlichen ersten Trainings-Samples in den ersten Trainingsdaten durch Hinzufügen von Rauschen zu den ersten Bildern, entsprechenden strukturierten Repräsentationen der Inhaltselemente, die durch die ersten Bilder dargestellt werden, oder beiden umfasst.

5. Verfahren nach Anspruch 4, wobei Erzeugen von zusätzlichen ersten Trainings-Samples in den ersten Trainingsdaten durch Hinzufügen von Rauschen zu den ersten Bildern, den entsprechenden strukturierten Repräsentationen der Inhaltselemente, die durch die ersten Bilder dargestellt werden, oder beiden Erzeugen eines zusätzlichen ersten Trainings-Samples durch Anpassen einer oder mehrerer von einer Farbe, einer Größe oder einem Ort eines Inhaltselements eines gegebenen ersten Bildes umfasst.

6. Verfahren nach einem der vorhergehenden Ansprüche, wobei der Bild-Parser ein neuronales Netzwerk umfasst, das ein erstes neuronales Sub-Netzwerk, das trainiert ist, um ein Rendering in mehrere Schichten aufzuteilen, und ein zweites neuronales Sub-Netzwerk, das trainiert ist, um die mehreren Schichten in Inhaltselemente und eine entsprechende strukturierte Repräsentation umzuwandeln, umfasst.

7. Verfahren nach einem der vorhergehenden Ansprüche, wobei:
jedes erste Trainings-Sample eine entsprechende strukturierte Repräsentation von Inhaltselementen umfasst, die durch das erste Bild des ersten Trainings-Samples dargestellt werden; und
Trainieren, unter Verwendung der ersten Trainingsdaten, des Bild-Parser-Modells, um strukturierte Repräsentationen von Eingabebildern auszugeben, Trainieren des Bild-Parser-Modells unter Verwendung von überwachtem Lernen umfasst.

8. Verfahren nach einem der Ansprüche 1 bis 6, wobei Trainieren, unter Verwendung der ersten Trainingsdaten, des Bild-Parser-Modells, um strukturierte Repräsentationen von Eingabebildern auszugeben, Trainieren des Bild-Parser-Modells umfasst, um eine Verlustfunktion basierend auf einer Differenz zwischen jedem ersten Bild und einem gerenderten Bild zu optimieren, das basierend auf einer strukturierten Repräsentation des ersten Bildes gerendert wird, die durch das Bild-Parser-Modell ausgegeben wird.

9. System (700), umfassend:
einen oder mehrere Prozessoren (710); und
eine oder mehrere Speichervorrichtungen (730), die Anweisungen speichern, die, wenn sie von dem einen oder den mehreren Prozessoren ausgeführt werden, den einen oder die mehreren Prozessoren veranlassen, das Verfahren nach einem der vorhergehenden Ansprüche auszuführen.

10. Computerlesbares Speichermedium, das Anweisungen trägt, die, wenn sie von einem oder mehreren Prozessoren ausgeführt werden, den einen oder die mehreren Prozessoren veranlassen, das Verfahren nach einem der Ansprüche 1 bis 8 auszuführen.

11. Computerprogrammprodukt, umfassend Anweisungen, die, wenn sie von einem oder mehreren Computern ausgeführt werden, den einen oder die mehreren Computer veranlassen, die Schritte des Verfahrens nach einem der Ansprüche 1 bis 8 auszuführen.

## Revendications

1. Procédé (600) comprenant :
l'obtention (602) de premières données d'entraînement comprenant un ensemble de premiers échantillons d'entraînement, dans lequel chaque premier échantillon d'entraînement comprend une première image ;
l'entraînement (604), à l'aide des premières données d'entraînement, d'un modèle d'analyseur d'images (222) pour produire des représentations structurées d'images d'entrée ;
l'obtention (606) d'un ensemble de secondes images ;
le traitement des secondes images à l'aide du modèle d'analyseur d'images pour générer (608) des secondes données d'entraînement comprenant un ensemble de seconds échantillons d'entraînement, dans lequel chaque second échantillon d'entraînement comprend une seconde image et une représentation structurée correspondante des éléments de contenu représentés par la seconde image produite par le modèle d'analyseur d'images sur la base de la seconde image ;
l'entraînement (610), à l'aide des secondes données d'entraînement, d'un modèle de conception d'image (224) pour produire une représentation structurée pour une entrée comprenant un ensemble d'éléments de contenu, l'ensemble d'éléments de contenu comprenant au moins l'un parmi un texte ou une ou plusieurs images ;
l'obtention (612) d'un nouvel ensemble d'éléments de contenu (502) pour une nouvelle image ;
le traitement de l'ensemble d'éléments de contenu pour la nouvelle image à l'aide du modèle de conception d'image pour générer (614) une nouvelle représentation structurée correspondante (504) pour la nouvelle image ; et
la génération (616) de la nouvelle image à l'aide de l'ensemble d'éléments de contenu et de la nouvelle représentation structurée.

2. Procédé selon la revendication 1, comprenant en outre la distribution de la nouvelle image à un ou plusieurs dispositifs clients.

3. Procédé selon la revendication 1 ou 2, dans lequel chaque représentation structurée indique des emplacements au niveau desquels du contenu est représenté par l'image correspondant à la représentation structurée.

4. Procédé selon une quelconque revendication précédente, dans lequel l'obtention des premières données d'entraînement comprend la génération de premiers échantillons d'entraînement supplémentaires dans les premières données d'entraînement en ajoutant du bruit aux premières images, aux représentations structurées correspondantes des éléments de contenu représentés par les premières images, ou aux deux.

5. Procédé selon la revendication 4, dans lequel la génération de premiers échantillons d'entraînement supplémentaires dans les premières données d'entraînement en ajoutant du bruit aux premières images, aux représentations structurées correspondantes des éléments de contenu représentés par les premières images, ou aux deux, comprend la génération d'un premier échantillon d'entraînement supplémentaire en réglant l'un ou plusieurs parmi une couleur, une taille ou un emplacement d'un élément de contenu d'une première image donnée.

6. Procédé selon une quelconque revendication précédente, dans lequel l'analyseur d'images comprend un réseau neuronal qui comprend un premier sous-réseau neuronal entraîné à diviser un rendu en multiples couches et un second sous-réseau neuronal entraîné à convertir les multiples couches en éléments de contenu et en une représentation structurée correspondante.

7. Procédé selon une quelconque revendication précédente, dans lequel :
chaque premier échantillon d'entraînement comprend une représentation structurée correspondante des éléments de contenu représentés par la première image du premier échantillon d'entraînement ; et
l'entraînement, à l'aide des premières données d'entraînement, du modèle d'analyseur d'images pour produire des représentations structurées d'images d'entrée comprend l'entraînement du modèle d'analyseur d'images à l'aide d'un apprentissage supervisé.

8. Procédé selon l'une quelconque des revendications 1 à 6, dans lequel l'entraînement, à l'aide des premières données d'entraînement, du modèle d'analyseur d'images pour produire des représentations structurées d'images d'entrée comprend l'entraînement du modèle d'analyseur d'images pour optimiser une fonction de perte sur la base d'une différence entre chaque première image et une image rendue qui est rendue sur la base d'une représentation structurée de la première image produite par le modèle d'analyseur d'images.

9. Système (700) comprenant :
un ou plusieurs processeurs (710) ; et
un ou plusieurs dispositifs de stockage (730) stockant des instructions qui, lorsqu'elles sont exécutées par les un ou plusieurs processeurs, amènent les un ou plusieurs processeurs à réaliser le procédé selon une quelconque revendication précédente.

10. Support de stockage lisible par ordinateur transportant des instructions qui, lorsqu'elles sont exécutées par un ou plusieurs processeurs, amènent les un ou plusieurs processeurs à réaliser le procédé selon l'une quelconque des revendications 1 à 8.

11. Produit de programme informatique comprenant des instructions qui, lorsqu'elles sont exécutées par un ou plusieurs ordinateurs, amènent les un ou plusieurs ordinateurs à réaliser les étapes du procédé selon l'une quelconque des revendications 1 à 8.
